# EUROPÄISCHE PATENTSCHRIFT

(11) **EP 2 277 089 B1**
(45) Veröffentlichungstag und Bekanntmachung des Hinweises auf die Patenterteilung: **25.09.2013**
(21) Anmeldenummer: 09704122.2
(22) Anmeldetag: 21.01.2009
(51) Int. Cl.: G05D 16/18, G05D 16/06, F16K 27/02

(54) **DRUCKSTELLGLIED, INSBESONDERE FARBDRUCKREGLER ODER BESCHICHTUNGSMITTELVENTIL**
PRESSURE-ACTUATED MEMBER, IN PARTICULAR PAINT PRESSURE CONTROLLER OR COATING AGENT VALVE
ÉLÉMENT DE RÉGLAGE DE PRESSION, NOTAMMENT RÉGULATEUR DE PRESSION DE PEINTURE OU SOUPAPE POUR AGENT DE REVÊTEMENT

(30) Priorität: 22.01.2008 DE 102008005492
(43) Veröffentlichungstag der Anmeldung: 26.01.2011
(73) Patentinhaber: Dürr Systems GmbH, 74321 Bietigheim-Bissingen (DE)
(72) Erfinder: BUCK, Thomas, 74343 Sachsenheim (DE); BAUMANN, Michael, 74223 Flein (DE); MELCHER, Rainer, 71720 Oberstenfeld (DE)
(74) Vertreter: Beier, Ralph
(86) Internationale Anmeldenummer: PCT/EP2009/000356
(87) Internationale Veröffentlichungsnummer: WO 2009/092572

(56) Entgegenhaltungen:
- EP-A- 1 376 289
- WO-A-01/40614
- WO-A1-03/042586
- DE-A1- 4 124 339
- JP-A- 58 146 776
- US-A1- 2003 080 219
- US-B1- 6 685 164

## Beschreibung

Die Erfindung betrifft ein Beschichtungsmittelventil zur Beeinflussung eines Beschichtungsmitteldrucks eines zu applizierenden Beschichtungsmittels in einer Lackieranlage.

Ein Farbdruckregler ist beispielsweise aus EP 1 376 289 A1 bekannt und wird verwendet, um in einer Lackieranlage einen vorgegebenen Beschichtungsmitteldruck einzustellen. Dieser bekannte Farbdruckregler weist eine Farbkammer mit einem Farbeinlass und einem Farbauslass auf, wobei in dem Farbeinlass ein federbelastetes Zulaufventil angeordnet ist, das den Farbeinlass im Ruhezustand verschließt. Darüber hinaus weist der bekannte Farbdruckregler eine Steuerluftkammer auf, die unmittelbar an die Farbkammer angrenzt und von der Farbkammer durch eine flexible Membran getrennt ist. Die Steuerluftkammer wird im Betrieb mit einem einstellbaren Steuerluftdruck beaufschlagt, der auf die Membran zwischen der Steuerluftkammer und der Farbkammer wirkt, so dass sich die Membran in Abhängigkeit von dem Druckunterschied zwischen der Farbkammer und der Steuerluftkammer deformiert. Zur Betätigung des Zulaufventils trägt die Membran mittig einen Betätigungsdorn, der bei einer druckbedingten Verformung der Membran das Zulaufventil öffnen kann.

Falls nun der Farbdruck in der Farbkammer unter einen vorgegebenen Soll-Wert absinkt, so übersteigt der Steuerluftdruck in der Steuerluftkammer den Farbdruck in der Farbkammer. Dies hat zur Folge, dass die zwischen der Steuerluftkammer und der Farbkammer befindliche Membran mit dem Betätigungsglied in Richtung des Zulaufventils ausgelenkt wird und dadurch das Zulaufventil öffnet. Nach dem Öffnen des Zulaufventils strömt Lack in die Farbkammer, wodurch der Druck in der Farbkammer ansteigt bis der Druck in der Farbkammer dem vorgegebenen Soll-Wert entspricht, woraufhin dann das Zulaufventil schließt.

Die Membran zwischen der Steuerluftkammer und der Farbkammer wird im Betrieb des Farbdruckreglers häufig verformt und besteht deshalb aus einem elastischen und entsprechend haltbaren Material, wie beispielsweise Polytetrafluorethylen (PTFE).

Nachteilig an dem vorstehend beschriebenen bekannten Farbdruckregler ist jedoch die geringe Verschleißfestigkeit der Membran und des Zulaufventils, was insbesondere bei einem Einsatz von Lacken mit einem hohen Festkörpergehalt und abrasiven Lackbestandteilen störend auffällt. So liegt die Standzeit der Membran und des Dichtsitzes des Zulaufventils teilweise nur im Bereich von ein bis zwei Wochen, was einen häufigen Bauteilaustausch erforderlich macht.

Ein weiterer Nachteil des vorstehend beschriebenen bekannten Farbdruckreglers besteht darin, dass das Zulaufventil eine separate Dichtung benötigt.

Ferner ist zum Stand der Technik hinzuweisen auf WO 01/40614 A, US 2003/080219 A1, JP 58 146776 A, US 6 685 164 B1, DE 41 24 339 A1 und WO 03/042586 A1. Diese Druckschriften offenbaren jedoch teilweise keine Beschichtungsmittelventile und teilweise nur Beschichtungsmittelventile mit einer unbefriedigenden Standzeit.

Der Erfindung liegt deshalb die Aufgabe zugrunde, den vorstehend beschriebenen Farbdruckregler entsprechend zu verbessern. Insbesondere ist es wünschenswert, die Standzeit der verschleißanfälligen Bauteile (Ventilsitz) zu erhöhen und/oder die Anzahl der Bauteile zu verringern. Ferner ist es wünschenswert, dass der Farbdruckregler ohne eine externe Druckbeaufschlagung sicher schließt.

Diese Aufgabe wird durch ein erfindungsgemäßes Beschichtungsmittelventil gemäß dem Hauptanspruch gelöst. -

Die Erfindung beruht auf der technischen Erkenntnis, dass die verschleißanfälligen Bauteile (Ventilsitz) bei den herkömmlichen Farbdruckreglern zwar den im Betrieb auftretenden Deformationen standhalten, aber durch Lacke mit einem hohen Festkörpergehalt bzw. abrasiven Lackbestandteilen beschädigt werden.

Die Erfindung umfasst deshalb die allgemeine technische Lehre, die verschleißanfälligen Bauteile (z.B. Ventilsitz, Membran) bei einem Druckstellglied (z.B. Farbdruckregler oder Beschichtungsmittelventil) mindestens teilweise aus einem Keramikwerkstoff zu fertigen, der den abrasiven Lackbestandteilen besser standhalten kann, was vorteilhaft zu einer größeren Standzeit führt und eine wesentlich seltenere Auswechslung der verschleißanfälligen Bauteile erforderlich macht.

Die Verwendung eines Keramikwerkstoffes zur Herstellung der Membran wurde bisher noch nicht in Betracht gezogen, da Keramikwerkstoffe in der Regel relativ spröde sind und deshalb bei den im Betrieb häufig auftretenden Verformungen schnell versagen würden. Im Rahmen der Erfindung wird deshalb vorzugsweise ein keramischer Faserverbundwerkstoff eingesetzt, der auch eine ausreichende Dauerverformbarkeit bietet.

Ein derartiger Faserverbundwerkstoff kann beispielsweise Fasern aus Kohlenstoff, Siliziumkarbid oder Aluminiumoxid, insbesondere Al₂O₃, und eine Matrix aus Siliziumkarbid oder Aluminiumoxid aufweisen.

versagen würden. Im Rahmen der Erfindung wird deshalb vorzugsweise ein keramischer Faserverbundwerkstoff eingesetzt, der auch eine ausreichende Dauerverformbarkeit bietet.

Ein derartiger Faserverbundwerkstoff kann beispielsweise Fasern aus Kohlenstoff, Siliziumkarbid oder Aluminiumoxid, insbesondere Al₂O₃, und eine Matrix aus Siliziumkarbid oder Aluminiumoxid aufweisen.

Darüber hinaus kann der Faserverbundwerkstoff beispielsweise eine zweidimensionale oder eine dreidimensionale Matrixstruktur aufweisen.

Vorzugsweise verfügt der im Rahmen der Erfindung verwendete Keramikwerkstoff über eine Bruchdehnung von mehr als 0,2%, 0,5%, 1% oder sogar mehr als 2%, damit sich die Membran im Betrieb zerstörungsfrei verformen kann. Vorzugsweise verhält sich der Keramikwerkstoff hierbei bis zu seiner Bruchdehnung im Wesentlichen elastisch, so dass sich die Membran selbstständig zurückstellt.

Aus der vorstehenden Beschreibung ist bereits ersichtlich, dass es sich bei dem erfindungsgemäßen Farbdruckregler um einen Farbdruckregler handelt, wie er in ähnlicher Form in der Patentanmeldung EP 1 376 289 A1 beschrieben ist, so dass der Inhalt dieser Patentanmeldung der vorliegenden Beschreibung in vollem Umfang zuzurechnen ist.

Bei der erfindungsgemäßen Variante als Farbdruckregler weist der Farbdruckregler vorzugsweise eine Farbkammer mit einem Beschichtungsmitteleinlass und einem Beschichtungsmittelauslass auf, wobei ein Zulaufventil den Zufluss des Beschichtungsmittels durch den Beschichtungsmitteleinlass in die Farbkammer steuert. Darüber hinaus weist der Farbdruckregler ist hierbei eine Membran angeordnet, die in Abhängigkeit von ihrer Membranstellung das Zulaufventil der Farbkammer betätigt.

Falls der Beschichtungsmitteldruck in der Farbkammer den vorgegebenen Steuerluftdruck unterschreitet, so wird die zwischen der Steuerluftkammer und der Farbkammer befindliche Membran in Richtung der Farbkammer ausgelenkt, so dass die Membran bzw. ein an der Membran angebrachtes Betätigungsglied das Zulaufventil öffnet, woraufhin Beschichtungsmittel in die Farbkammer einströmt und den Beschichtungsmitteldruck in der Farbkammer erhöht.

Falls der Beschichtungsmitteldruck in der Farbkammer dann bis auf den Steuerluftdruck in der Steuerluftkammer angestiegen ist, so wird die Membran wieder zurückgestellt, woraufhin sich das Zulaufventil in dem Zufluss der Farbkammer schließt.

Auf diese Weise stellt der Farbdruckregler - wie in EP 1 376 289 A1 ausführlich beschrieben - den Beschichtungsmitteldruck auf einen Soll-Wert ein, der durch den Steuerluftdruck in der Steuerluftkammer vorgegeben wird.

Vorzugsweise besteht hierbei die Membran mindestens teilweise aus dem Keramikwerkstoff, um den abrasiven Lackbestandteilen möglichst lange standhalten zu können.

Darüber hinaus besteht hierbei vorzugsweise auch das Zulaufventil mindestens teilweise aus einem Keramikwerkstoff, um die Standzeit zu erhöhen.

Gemäß der Erfindung weist das Zulaufventil der Farbkammer eine Ventilkugel und einen Ventilsitz auf, wobei die Ventilkugel und der Ventilsitz mindestens teilweise aus dem Keramikwerkstoff bestehen.

Die Fertigung des Ventilsitzes aus einem Keramikwerkstoff bietet den Vorteil, dass das Zulaufventil keine separate Dichtung aufweisen muss, insbesondere keinen Dichtungsring aus Gummi oder Kunststoff.

Bei dem erfindungsgemäßen Farbdruckregler ist die zwischen der Steuerluftkammer und der Farbkammer befindliche Membran zwischen einer Öffnungsstellung und einer Schließstellung beweglich, wobei die Membran das Zulaufventil in der Öffnungsstellung öffnet, wohingegen die Membran das Zulaufventil in der Schließstellung nicht öffnet, so dass das Zulaufventil dann geschlossen ist. Vorzugsweise ist hierbei ein Rückstellmechanismus vorgesehen, der die Membran aus der Öffnungsstellung in die Schließstellung zurückstellt, sofern der Steuerluftdruck bzw. der Beschichtungsmitteldruck keine andere Membranstellung bewirken. Der Rückstellmechanismus bietet den Vorteil, dass der Farbdruckregler ohne eine Druckbeaufschlagung eine definierte Stellung einnimmt, in der der Farbdruckregler geschlossen ist. Hierzu ist zu bemerken, dass die Erfindung auch Schutz beansprucht für ein herkömmliches Druckstellglied, insbesondere einen Farbdruckregler mit einer beispielsweise aus PTFE bestehenden herkömmlichen Membran und einem herkömmlichen Zulaufventil gemäß EP 1 376 289 A1, sofern der vorstehend beschriebene Rückstellmechanismus vorgesehen ist.

Vorzugsweise weist der Rückstellmechanismus eine Rückstellfeder auf, die auf die Membran wirkt.

Die Rückstellfeder kann sich an einer Seite beispielsweise an einem feststehenden Gehäuseteil abstützen, während sich die Rückstellfeder an dem gegenüberliegenden Ende an einem Betätigungsglied abstützen kann, das an der Membran mittig angebracht ist.

Hinsichtlich der konstruktiven Ausführung der Rückstellfeder bestehen zahlreiche Möglichkeiten. Beispielsweise kann die Rückstellfeder als Spiralfeder, Tellerfeder, Federplatine oder Druckfeder ausgestaltet sein, wobei die Druckfeder in die Membran integriert sein kann.

Vorzugsweise ist das erfindungsgemäße Druckstellglied so ausgelegt, dass eine Standzeit von mehr als zwei Wochen, einem Monat, sechs Monaten oder einem Jahr im Dauerbetrieb erreicht wird, wenn das Beschichtungsmittel ein Flüssiglack mit einem Festkörperanteil von mehr als 50%, 60%, 70%, 80% oder 90% ist.

Ferner ist zu erwähnen, dass die Erfindung nicht nur den vorstehend beschriebenen Farbdruckregler als Einzelteil umfasst, sondern auch Schutz beansprucht für eine Lackieranlage mit mindestens einem derartigen Farbdruckregler.

Darüber hinaus umfasst die Erfindung auch ein neuartiges Betriebsverfahren für eine Lackieranlage mit einem erfindungsgemäßen Farbdruckregler, wobei das dem Beschichtungsmittel ausgesetzte, verschleißanfällige Bauteil (z.B. Membran, Ventilsitz) des Farbdruckreglers aufgrund einer abrasiven Wirkung des Beschichtungsmittels nach einer bestimmten Standzeit ausgewechselt wird. Das erfindungsgemäße Betriebsverfahren zeichnet sich dadurch aus, dass die Standzeit des Bauteils größer ist als zwei Wochen, ein Monat, sechs Monate oder ein Jahr, so dass das verschleißanfällige Bauteil (z.B. Membran, Ventilsitz) entsprechend selten ausgewechselt wird. Schließlich umfasst die Erfindung auch die neuartige Verwendung eines Keramikwerkstoffs zur Herstellung eines einem Beschichtungsmittel ausgesetzten und zur Druckbeeinflussung beweglichen und/oder verformbaren Bauteils eines Farbdruckreglers einer Lackieranlage.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Querschnittsansicht eines erfindungsgemäßen Farbdruckreglers mit einer Membran und einem Ventilsitz aus einem Keramikwerkstoff sowie
- Figur 2: ein alternatives Ausführungsbeispiel eines erfindungsgemäßen Farbdruckreglers mit einem Rückstellmechanismus für die Membran.

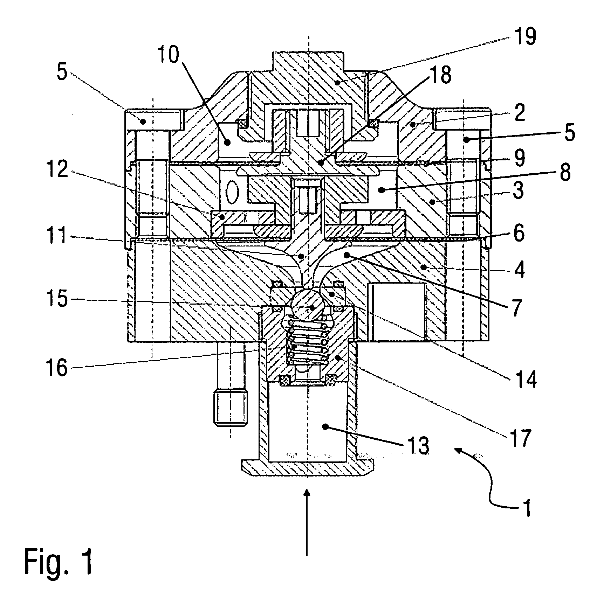

Figur 1 zeigt einen erfindungsgemäßen Farbdruckregler 1 zur Einstellung eines Beschichtungsmitteldrucks in einer Lackieranlage.

Der Farbdruckregler 1 entspricht weitgehend den herkömmlichen Farbdruckreglern, die beispielsweise in der Patentanmeldung EP 1 376 289 A1 beschrieben sind, so dass der Inhalt dieser Patentanmeldung der vorliegenden Beschreibung hinsichtlich des Aufbaus und der Funktionsweise des Farbdruckreglers 1 in vollem Umfang zuzurechnen ist.

Der Farbdruckregler 1 weist drei übereinanderliegende Gehäusebauteile 2, 3, 4 auf, die durch Schrauben 5 fest miteinander verbunden sind.

Zwischen dem Gehäusebauteil 3 und dem Gehäusebauteil 4 befindet sich hierbei eine Membran 6 aus einem keramischen Faserverbundwerkstoff, wobei die Membran 6 eine Farbkammer 7 von einer Steuerluftkammer 8 trennt.

Zwischen dem Gehäusebauteil 2 und dem Gehäusebauteil 3 befindet sich eine weitere Membran 9, die ebenfalls aus einem keramischen Faserverbundwerkstoff besteht und die Steuerluftkammer 8 von einer Sperrluftkammer 10 trennt.

In der Mitte der Membran 6 befindet sich eine Bohrung, in der ein Betätigungsdorn 11 angeordnet ist, wobei die technische Bedeutung des Betätigungsdorns 11 noch detailliert beschrieben wird.

In der Steuerluftkammer 8 ist in das Gehäusebauteil 3 eine ringförmige Anschlagplatte 12 eingesetzt, wobei die Anschlagplatte 12 den Bewegungsspielraum des Betätigungsdorns 11 und damit auch der Membran 6 nach oben begrenzt. Dies bedeutet, dass sich der Betätigungsdorn 11 nach oben hin nur bis in die in der Zeichnung gezeigte Stellung bewegen kann, in der der Betätigungsdorn 11 dann an die Anschlagplatte 12 anschlägt.

Weiterhin weist der Farbdruckregler 1 einen Beschichtungsmitteleinlass 13 auf, über den Beschichtungsmittel in die Farbkammer 7 einströmen kann.

In dem Beschichtungsmitteleinlass 13 ist hierbei ein Zulaufventil angeordnet, das im Wesentlichen aus einem Ventilsitz 14, einer Ventilkugel 15, einer Ventilfeder 16 und einem Ventilgehäuse 17 besteht. Die Ventilfeder, 16 drückt die Ventilkugel 15 mit einer bestimmten Federkraft in den Ventilsitz 14, so dass das Zulaufventil zu der Farbkammer 7 im Ruhezustand geschlossen ist.

Darüber hinaus weist der Farbdruckregler 1 einen Beschichtungsmittelauslass auf, über den das zu applizierende Beschichtungsmittel mit dem gewünschten Beschichtungsmitteldruck aus der Farbkammer 7 ausströmen kann, wobei der Beschichtungsauslass in der Zeichnung nicht erkennbar ist.

Schließlich weist auch die Sperrluftkammer 10 einen zur Vereinfachung nicht dargestellten Druckluftanschluss auf, um die Sperrluftkammer 10 mit einem Sperrluftdruck zu beaufschlagen, wie noch detailliert beschrieben wird. Die Membran 9 zwischen der Sperrluftkammer 10 und der Steuerluftkammer 8 weist mittig ebenfalls eine Bohrung auf, in der ein Betätigungsglied 18 angeordnet ist.

Schließlich ist das obere Gehäusebauteil 2 durch einen Deckel 19 abgeschlossen, der von unten in das Gehäusebauteil 2 eingeschraubt ist, wobei der Zwischenraum zwischen dem Deckel 19 und dem Gehäusebauteil 2 durch einen Dichtungsring abgedichtet ist.

Im Folgenden wird nun der Betrieb des erfindungsgemäßen Farbdruckreglers 1 beschrieben.

Zunächst wird ein gewünschter Soll-Wert des Beschichtungsmitteldrucks vorgegeben, indem der Steuerluftdruck in der Steuerluftkammer 8 eingestellt wird. Der Steuerluftdruck in der Steuerluftkammer 8 wirkt dann durch Bohrungen in der Anschlagplatte 12 auf die Membran 6 zwischen der Steuerluftkammer 8 und der Farbkammer 7.

Solange der Beschichtungsmitteldruck in der Farbkammer 7 unter dem Steuerluftdruck in der Steuerluftkammer 8 liegt, führt der Steuerluftdruck dazu, dass die Membran 6 mit dem Betätigungsdorn 11 nach unten ausgelenkt wird. Dabei drückt der Betätigungsdorn 11 die Ventilkugel 15 aus dem Ventilsitz 14 heraus, wodurch sich das Zulaufventil öffnet. Dabei strömt Beschichtungsmittel in die Farbkammer 7 ein, wodurch der Beschichtungsmitteldruck in der Farbkammer 7 ansteigt.

Sobald der Beschichtungsmitteldruck in der Farbkammer 7 dem Steuerluftdruck in der Steuerluftkammer 8 entspricht, wird die Membran 6 nicht mehr nach unten ausgelenkt, wodurch sich das Zulaufventil der Farbkammer 7 schließt. Der Abfluss des Beschichtungsmittels aus der Farbkammer 7 führt dann wieder zu einem abnehmenden Beschichtungsmitteldruck in der Farbkammer 7, bis der abnehmende Beschichtungsmitteldruck in der Farbkammer 7 wieder zu einem Öffnen des Zulaufventils führt. Auf diese Weise wird der Beschichtungsmitteldruck in der Farbkammer 7 auf den vorgegebenen Soll-Wert eingeregelt.

Darüber hinaus ermöglicht der Farbdruckregler 1 ein Öffnen des Zulaufventils unabhängig von den sonstigen Druckverhältnissen, was beispielsweise beim Molchen erforderlich ist. Hierzu wird die Sperrluftkammer 10 mit einem ausreichend hohen Sperrluftdruck beaufschlagt, wodurch die Membran 9 mit dem Betätigungsglied 18 nach unten ausgelenkt wird. Das Betätigungsglied 18 drückt dann den Betätigungsdorn 11 nach unten bis die Ventilkugel 15 aus dem Ventilsitz 14 herausgedrückt wird, wodurch das Zulaufventil öffnet.

Wichtig ist bei dem Farbdruckregler 1, dass die beiden Membranen 6, 9 und der Ventilsitz 14 aus einem keramischen Faserverbundwerkstoff bestehen. Dies bietet den Vorteil, dass die Membranen 6, 9 und der Ventilsitz 14 den abrasiven Lackbestandteilen besser standhalten, was zu einer wesentlich größeren Standzeit führt.

Ein weiterer Vorteil besteht darin, dass der Ventilsitz 14 zur Abdichtung keinen separaten Dichtungsring aus Gummi oder Kunststoff benötigt, wie es bei den herkömmlichen Farbdruckreglern der Fall ist.

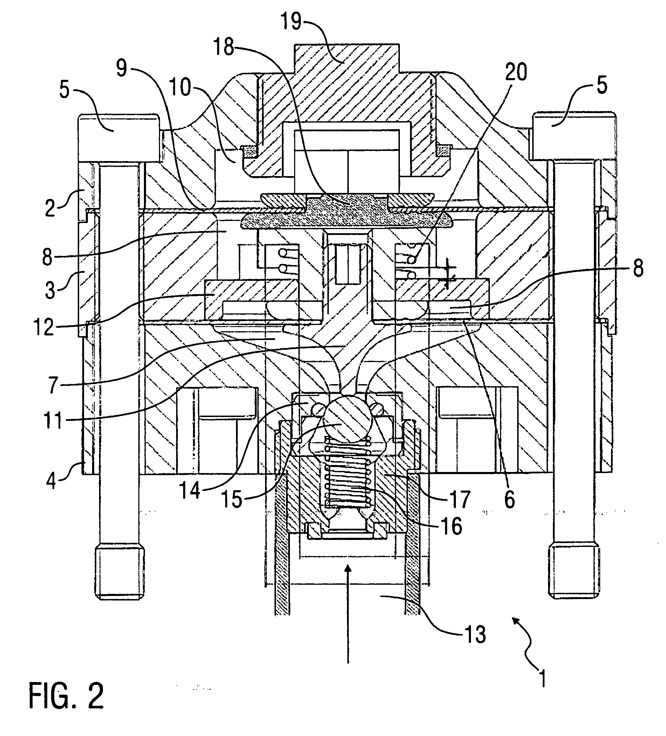

Figur 2 zeigt eine Abwandlung des Farbdruckreglers aus Figur 1, so dass zur Vermeidung von Wiederholungen auf die vorstehende Beschreibung des Ausführungsbeispiels gemäß Figur 1 verwiesen wird, wobei für entsprechende Einzelheiten dieselben Bezugszeichen verwendet werden.

Eine Besonderheit dieses Ausführungsbeispiels besteht darin, dass ein Rückstellmechanismus vorgesehen ist, der den Betätigungsdorn 11 und damit auch die Membran 6 nach oben zurückstellt, wenn keine äußeren Kräfte wirken. Hierzu weist der Rückstellmechanismus eine Rückstellfeder 20 auf, die sich einerseits an der Oberseite der ringförmigen Anschlagplatte 12 und andererseits an dem Betätigungsdorn 11 abstützt, so dass die Rückstellfeder 20 die Membran 6 nach oben in die in der Zeichnung gezeigte Anschlagstellung drückt.

Der Rückstellmechanismus stellt in diesem Ausführungsbeispiel sicher, dass das Zulaufventil ohne äußere Druckbeaufschlagung geschlossen ist, so dass kein Beschichtungsmittel abgegeben wird.

Hierbei bestehen die Membranen 6, 9 und der Ventilsitz 14 aus einem keramischen Faserverbundswerkstoff, was mit den vorstehenden beschriebenen Vorteilen verbunden ist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls in den Schutzbereich fallen.

### Bezugszeichenliste

- 1: Farbdruckregler
- 2-4: Gehäusebauteile
- 5: Schrauben
- 6: Membran
- 7: Farbkammer
- 8: Steuerluftkammer
- 9: Membran
- 10: Sperrluftkammer
- 11: Betätigungsdorn
- 12: Anschlagplatte
- 13: Beschichtungsmitteleinlass
- 14: Ventilsitz
- 15: Ventilkugel
- 16: Ventilfeder
- 17: Ventilgehäuse
- 18: Betätigungsglied
- 19: Deckel
- 20: Rückstellfeder

## Patentansprüche

1. Beschichtungsmittelventil zur Beeinflussung eines Beschichtungsmitteldrucks eines zu applizierenden Beschichtungsmittels in einer Lackieranlage, mit einer beweglichen Ventilkugel (15) und einem Ventilsitz (14), die im Betrieb dem Beschichtungsmittel unmittelbar ausgesetzt sind, **dadurch gekennzeichnet, dass** die Ventilkugel (15) und der Ventilsitz (14) aus einem Keramikwerkstoff bestehen.

2. Farbdruckregler, **gekennzeichnet durch**
a) eine Farbkammer (7) mit einem Beschichtungsmitteleinlass und einem Beschichtungsmittelauslass,
b) das Beschichtungsmittelventil gemäß Anspruch 1 als ein Zulaufventil (14, 15, 16, 17), das den Zufluss des Beschichtungsmittels **durch** den Beschichtungsmitteleinlass in die Farbkammer (7) steuert,
c) eine Steuerluftkammer (8), die zur Einstellung des Beschichtungsmitteldrucks mit einem Steuerluftdruck beaufschlagt werden kann, wobei der Steuerluftdruck in der Steuerluftkammer (8) den Beschichtungsmitteldruck bestimmt, und
d) eine Membran (6), die zwischen der Steuerluftkammer (8) und der Farbkammer (7) angeordnet ist und in Abhängigkeit von ihrer Membranstellung das Zulaufventil (14, 15, 16, 17) der Farbkammer (7) betätigt.

3. Farbdruckregler (1) nach Anspruch 2,
**dadurch gekennzeichnet, dass** die Membran (6) mindestens teilweise aus einem Keramikwerkstoff besteht.

4. Farbdruckregler (1) nach einem der Ansprüche 2 oder 3,
**dadurch gekennzeichnet, dass** das Zulaufventil (14, 15, 16, 17) keine separate Dichtung aufweist, insbesondere keinen Dichtungsring aus Gummi oder Kunststoff.

5. Farbdruckregler (1) nach einem der Ansprüche 2 bis 4,
**dadurch gekennzeichnet,**
a) **dass** die Membran (6) zwischen einer Öffnungsstellung und einer Schließstellung beweglich ist, wobei die Membran (6) das Zulaufventil (14, 15, 16, 17) in der Öffnungsstellung öffnet, wohingegen die Membran (6) das Zulaufventil (14, 15, 16, 17) in der Schließstellung nicht öffnet, und
b) **dass** ein Rückstellmechanismus (20) vorgesehen ist, der die Membran (6) aus der Öffnungsstellung in die Schließstellung zurückstellt.

6. Farbdruckregler (1) nach Anspruch 5, **dadurch gekennzeichnet, dass** der Rückstellmechanismus (20) eine Rückstellfeder aufweist, die auf die Membran (6) wirkt.

7. Farbdruckregler (1) nach Anspruch 6,
**dadurch gekennzeichnet,**
a) **dass** an der Membran (6) mittig ein Betätigungsglied (11) angebracht ist, welches das Zulaufventil (14, 15, 16, 17) betätigt, und
b) **dass** sich die Rückstellfeder (20) einerseits an dem Betätigungsglied (11) und andererseits an einem feststehenden Gehäuseteil (12) abstützt.

8. Farbdruckregler (1) nach einem der Ansprüche 2 bis 7, **dadurch gekennzeichnet, dass** der Keramikwerkstoff ein keramischer Faserverbundwerkstoff ist.

9. Farbdruckregler (1) nach Anspruch 8,
**dadurch gekennzeichnet,**
a) **dass** der Faserverbundwerkstoff Fasern aus Kohlenstoff, Siliziumcarbid oder Aluminiumoxid, insbesondere Al₂O₃, enthält, und/oder
b) **dass** der Faserverbundwerkstoff eine Matrix aus Siliziumcarbid oder Aluminiumoxid enthält.

10. Farbdruckregler (1) nach Anspruch 8 oder 9,
**dadurch gekennzeichnet,**
a) **dass** der Faserverbundwerkstoff eine zweidimensionale Matrixstruktur aufweist, oder
b) **dass** der Faserverbundwerkstoff eine dreidimensionale Matrixstruktur aufweist.

11. Farbdruckregler (1) nach einem der vorhergehenden Ansprüche, **dadurch gekennzeichnet,**
a) **dass** der Keramikwerkstoff eine Bruchdehnung von mehr 0,2%, 0,5%, 1% oder 2% aufweist, und/oder
b) **dass** der Keramikwerkstoff bis zu der Bruchdehnung im Wesentlichen elastisch ist.

12. Lackieranlage mit mindestens einem Farbdruckregler (1) nach einem der Ansprüche 2 bis 11.

## Claims

1. Coating agent valve for influencing a coating agent pressure of a coating agent to be applied in a painting installation, comprising a movable valve ball (15) and a valve seat (14), which are directly exposed to the coating agent during operation, **characterised in that** the valve ball (15) and the valve seat (14) are made from a ceramic material.

2. Paint pressure regulator (1) **characterised by**
a) a paint chamber (7) having a coating agent inlet and a coating agent outlet,
b) a coating agent valve according to claim 1 as an intake valve (14, 15, 16, 17) which controls the supply of coating agent through the coating agent inlet into the paint chamber (7),
c) a control air chamber (8) to which a control air pressure can be applied in order to set the coating agent pressure, wherein the control air pressure in the control air chamber (8) determines the coating agent pressure, and
d) a membrane (6) which is arranged between the control air chamber (8) and the paint chamber (7) and which, as a function of its membrane position, actuates the intake valve (14, 15, 16, 17) of the paint chamber (7).

3. Paint pressure regulator (1) according to claim 2, **characterised in that** the membrane (6) is made at least partially from a ceramic material.

4. Paint pressure regulator (1) according to claim 2 or 3, **characterised in that** the intake valve (14, 15, 16, 17) has no separate seal, in particular no sealing ring made from rubber or plastic.

5. Paint pressure regulator (1) according to one of claims 2 to 4, **characterised in that**
a) the membrane (6) is movable between an open position and a closed position, wherein the membrane (6) opens the intake valve (14, 15, 16, 17) in the open position, whereas the membrane (6) does not open the intake valve (14, 15, 16, 17) in the closed position, and
b) a return mechanism (20) is provided which returns the membrane (6) from the open position to the closed position.

6. Paint pressure regulator (1) according to claim 5, **characterised in that** the return mechanism (20) comprises a return spring which acts on the membrane (6).

7. Paint pressure regulator (1) according to claim 6, **characterised in that**
a) an actuating member (11) which actuates the intake valve (14, 15, 16, 17) is centrally attached to the membrane (6), and
b) the return spring (20) is supported at one side against the actuating member (11) and at the other side against a stationary housing part (12).

8. Paint pressure regulator (1) according to one of claims 2 to 7, **characterised in that** the ceramic material is a ceramic fibre composite material.

9. Paint pressure regulator (1) according to claim 8, **characterised in that**
a) the fibre composite material contains fibres made from carbon, silicon carbide or aluminium oxide, in particular Al₂O₃, and/or
b) the fibre composite material contains a matrix made from silicon carbide or aluminium oxide.

10. Paint pressure regulator (1) according to claim 8 or 9, **characterised in that**
a) the fibre composite material has a two-dimensional matrix structure, or
b) the fibre composite material has a three-dimensional matrix structure.

11. Paint pressure regulator (1) according to one of the preceding claims, **characterised in that**
a) the ceramic material has an elongation at break of more than 0.2%, 0.5%, 1% or 2%, and/or
b) the ceramic material is substantially elastic up to the elongation at break.

12. Painting installation comprising at least one paint pressure regulator (1) according to one of claims 2 to 11.

## Revendications

1. Soupape pour produit de revêtement destinée à influencer la pression d'un produit de revêtement à appliquer dans une installation de peinture, comportant une bille de soupape (15) mobile et un siège de soupape (14) qui, en cours de service, sont exposés directement au produit de revêtement, **caractérisée en ce que** la bille de soupape (15) et le siège de soupape (14) sont réalisés dans un matériau céramique.

2. Régulateur de la pression de la peinture, **caractérisé par**
a) une chambre de peinture (7) avec une entrée pour produit de revêtement et une sortie pour produit de revêtement,
b) la soupape pour produit de revêtement selon la revendication 1 sous la forme d'une soupape d'admission (14, 15, 16, 17) qui commande l'acheminement du produit de revêtement à l'intérieur de la chambre de peinture (7) via l'entrée pour produit de revêtement,
c) une chambre d'air de commande (8) qui peut être sollicitée par une pression de l'air de commande pour le réglage de la pression du produit de revêtement, la pression de l'air de commande dans la chambre d'air de commande (8) déterminant la pression du produit de revêtement, et
d) une membrane (6) qui est agencée entre la chambre d'air de commande (8) et la chambre de peinture (7) et qui, en fonction de sa position, actionne la soupape d'admission (14, 15, 16, 17) de la chambre de peinture (7).

3. Régulateur de la pression de la peinture (1) selon la revendication 2, **caractérisé en ce que** la membrane (6) est réalisée au moins en partie dans un matériau céramique.

4. Régulateur de la pression de la peinture (1) selon la revendication 2 ou 3, **caractérisé en ce que** la soupape d'admission (14, 15, 16, 17) ne comporte pas de joint d'étanchéité séparé, en particulier pas de bague d'étanchéité en caoutchouc ou en matière plastique.

5. Régulateur de la pression de la peinture (1) selon l'une quelconque des revendications 2 à 4, **caractérisé**
a) **en ce que** la membrane (6) est mobile entre une position d'ouverture et une position de fermeture, ladite membrane (6) ouvrant la soupape d'admission (14, 15, 16, 17) dans la position d'ouverture, alors que la membrane (6) n'ouvre pas la soupape d'admission (14, 15, 16, 17) dans la position de fermeture, et
b) **en ce qu'**il est prévu un mécanisme de rappel (20), qui ramène la membrane (6) hors de la position d'ouverture dans la position de fermeture.

6. Régulateur de la pression de la peinture (1) selon la revendication 5, **caractérisé en ce que** le mécanisme de rappel (20) comporte un ressort de rappel qui agit sur la membrane (6).

7. Régulateur de la pression de la peinture (1) selon la revendication 6, **caractérisé**
a) **en ce qu'**au milieu de la membrane (6) est agencé un actionneur (11) qui actionne la soupape d'admission (14, 15, 16, 17), et
b) **en ce que** le ressort de rappel (20) prend appui, d'une part, sur l'actionneur (11) et, d'autre part, sur une partie fixe (12) du boîtier.

8. Régulateur de la pression de la peinture (1) selon l'une quelconque des revendications 2 à 7, **caractérisé en ce que** le matériau céramique est un matériau céramique renforcé par des fibres.

9. Régulateur de la pression de la peinture (1) selon la revendication 8, **caractérisé**
a) **en ce que** le matériau renforcé par des fibres contient des fibres de carbone, de carbure de silicium ou d'oxyde d'aluminium, en particulier Al₂O₃, et/ou
b) **en ce que** le matériau renforcé par des fibres contient une matrice en carbure de silicium ou oxyde d'aluminium.

10. Régulateur de la pression de la peinture (1) selon la revendication 8 ou 9, **caractérisé**
a) **en ce que** le matériau renforcé par des fibres comporte une structure de matrice bidimensionnelle, ou
b) **en ce que** le matériau renforcé par des fibres comporte une structure de matrice tridimensionnelle.

11. Régulateur de la pression de la peinture (1) selon l'une quelconque des revendications précédentes, **caractérisé**
a) **en ce que** le matériau céramique comporte un allongement à la rupture de plus de 0,2 %, 0,5 %, 1 % ou 2 %, et/ou
b) **en ce que** le matériau céramique est sensiblement élastique jusqu'à l'allongement à la rupture.

12. Installation de peinture comportant au moins un régulateur de la pression de la peinture (1) selon l'une quelconque des revendications 2 à 11.
